# EUROPÄISCHE PATENTANMELDUNG

(11) **EP 3 327 316 A1**
(43) Veröffentlichungstag der Anmeldung: **30.05.2018**
(21) Anmeldenummer: 17202520.7
(22) Anmeldetag: 20.11.2017
(51) Int. Cl.: F16H 57/08, F01D 25/18, F02C 7/36, F16H 57/04

(54) **VORRICHTUNG MIT EINEM DREHFESTEN ERSTEN BAUTEIL UND EINEM ZUMINDEST BEREICHSWEISE MIT DEM ERSTEN BAUTEIL DREHBAR VERBUNDENEN ZWEITEN BAUTEIL**

(30) Priorität: 23.11.2016 DE 102016122583
(71) Anmelder: Rolls-Royce Deutschland Ltd & Co KG, 15827 Blankenfelde-Mahlow (DE)
(72) Erfinder: Venter, Gideon, 14165 Berlin (DE)
(74) Vertreter: Schmidt, Martin Michael

(57) **Zusammenfassung**

Es wird eine Vorrichtung (21) mit einem drehfesten ersten Bauteil (27) und einem zumindest bereichsweise mit dem ersten Bauteil (27) drehbar verbundenen zweiten Bauteil (28) beschrieben. Hydraulikfluid ist über das erste Bauteil (27) und das zweite Bauteil (28) zu Schmierstellen führbar, wobei eine Schnittstelle (29) zwischen den Bauteilen (27, 28) einen ersten Überleitungsbereich (32) und einen zweiten, in axialer Erstreckung der Bauteile (27, 28) zu dem ersten Überleitungsbereich (32) beabstandeten Überleitungsbereich (56, 57) aufweist. Der erste Überleitungsbereich (32) ist im Betrieb mit einem Druck beaufschlagt, der größer als ein Druck ist, mit dem der zweite Überleitungsbereich (56, 57) im Betrieb beaufschlagt ist. Im Bereich der Schnittstelle (29) ist in axialer Erstreckung der Bauteile (27, 28) zwischen dem ersten Überleitungsbereich (32) und dem zweiten Überleitungsbereich (56, 57) eine Dichteinrichtung (31) angeordnet, die im Bereich einer einer Oberfläche (35 bzw. 36) des ersten Bauteiles (27) oder des zweiten Bauteiles (28) zugewandten Oberfläche (36 bzw. 35) des zweiten Bauteiles (28) oder des ersten Bauteiles (27) mit wenigstens einem Gewindebereich (62, 63) ausgebildet ist.

## Beschreibung

Die Erfindung betrifft eine Vorrichtung mit einem drehfesten ersten Bauteil und einem zumindest bereichsweise mit dem ersten Bauteil drehbar verbundenen zweiten Bauteil gemäß der im Oberbegriff des Patentanspruchs 1 näher definierten Art.

Aus der Praxis sind Vorrichtungen bekannt, die mit einem drehfesten ersten Bauteil und einem zumindest bereichsweise mit dem ersten Bauteil drehbar verbundenen zweiten Bauteil ausgebildet sind, bei welchen Hydraulikfluid über das erste Bauteil und das zweite Bauteil zu Schmierstellen führbar ist. Derartige konstruktive Anordnungen zur Übertragung von Hydraulikfluid zwischen einem drehfesten Bauteil und einem damit drehbar verbundenen zweiten Bauteil sind beispielsweise bei Planetengetrieben erforderlich, über die Lagereinheiten und Zahneingriffe im erforderlichen Umfang mit Schmier- und Kühlöl versorgt werden.

Planetengetriebe werden im Bereich von Turbomaschinen, wie Flugtriebwerken mit hohem Nebenstromverhältnis, eingesetzt, um eine Drehgeschwindigkeit eines Bläsers kleiner als eine Drehgeschwindigkeit der Niederdruckturbine zu erzielen, so dass sowohl der Bläser als auch die Niederdruckturbine in optimalen Betriebsbereichen betrieben werden können. Die Niederdruckturbine und der Bläser sind beispielsweise über ein Untersetzungsgetriebe in Planetenbauweise miteinander gekoppelt, wobei Umlaufuntersetzungsgetriebe mit gehäusefestem Planetenträger oder mit drehbar ausgeführtem Planetenträger das gewünschte Untersetzungsverhältnis bei gleichzeitig hoher Leistungsdichte bieten.

Um bei gehäusefest ausgeführtem Planetenträger das erforderliche Untersetzungsverhältnis im Bereich eines Umlaufgetriebes bzw. eines Planetenradsatzes zu erreichen, ist eine Kompressorwelle der Niederdruckturbine mit einem Sonnenrad eines Umlaufgetriebes verbunden. Das Hohlrad ist wiederum mit einer den Bläser antreibenden Bläserwelle gekoppelt. Die Reaktionsmomente werden im Bereich des statischen Planetenträgers in das Gehäuse eingeleitet. Ist das Hohlrad drehfest ausgeführt, liegt im Bereich des Sonnenrads eine hohe Eingangsdrehzahl bei gleichzeitig niedriger Ausgangsdrehzahl des Planetenträgers vor.

Um bei einem Bläserumlaufuntersetzungsgetriebe mit rotierendem Planetenträger Schmierstellen im Bereich des Planetenradsatzes im gewünschten Umfang mit Hydraulikfluid versorgen zu können, wird Hydraulikfluid unter Druck aus einer statischen bzw. drehfesten Gehäusestruktur in eine rotierende Struktur, wie beispielsweise den rotierenden Planetenträger, überführt. Dann sind Zahneingriffe des Planetenradsatzes in gleichem Umfang wie Lagereinheiten eines Hauptantriebsstrangs eines Triebwerks mit Schmier- und Kühlöl versorgbar.

Besonders sogenannte Hochgeschwindigkeitsplanetenradsätze sind jeweils mit einem entsprechend großen Hydraulikfluidvolumenstrom zu versorgen, um eine ausreichende Schmierung und Kühlung von Zahneingriffen zu gewährleisten und die im Betrieb auftretenden Wärmeverluste in entsprechendem Umfang abführen zu können. Zur Schmier- und Kühlölversorgung insbesondere von Gleitlagereinrichtungen eines Hauptantriebsstrangs sind dagegen kleinere Hydraulikfluiddrücke und höhere Hydraulikfluidvolumenströme erforderlich. Um die gewünschten Drücke und Volumenströme im Bereich der rotierenden Bauteile erzielen zu können, ist es bekannt, einen zwischen den Bauteilen übertragenen Hydraulikfluidvolumenstrom stromab der Bauteile mit einer konstruktiv aufwendigen mehrstufigen Dichteinrichtung auf die erforderlichen Drücke und Volumenströme einzustellen.

Um einen Überleitungsbereich zwischen einem drehfesten und einem drehbaren Bauteil gegenüber einer Umgebung abzudichten, ist es aus der DE 10 2014 117 840 A1 bekannt, eine Dichteinrichtung im Bereich einer Schnittstelle zwischen einem drehfesten und einem drehbaren Bauteil mit einem Gewindebereich auszubilden.

Grundsätzlich steht die Lebensdauer von Dichteinrichtungen im Bereich von Ölzuführungen in Abhängigkeit von der jeweils vorliegenden Betriebstemperatur, der Umfangsgeschwindigkeit des rotierenden Bauteils und der an einer Dichteinrichtung jeweils anliegenden Druckdifferenz. Dabei wirken sich hohe Umfangsgeschwindigkeiten und hohe Zuführdrücke nachteilig auf die Lebensdauer einer Dichtung aus. Aus einer sich über der Betriebsdauer eines Flugtriebwerkes verschlechternden Dichtwirkung resultiert ein Rückgang der Schmierung, was wiederum eine Schädigung im Bereich eines Untersetzungsgetriebes und einen unerwünschten Ausfall der Funktionsweise eines solchen Untersetzungsgetriebes begünstigt.

Bei einer in der US 2012/0192570 A1 beschriebenen Ausführung eines Gasturbinentriebwerks sind verschiedene Bereiche des Gasturbinentriebwerks mit jeweils über separate Leitungen bereitstellbaren Hydraulikfluidvolumenströmen zu kühlen bzw. zu schmieren, wobei die Hydraulikfluidvolumenströme jeweils über separate Strömungswege zwischen einem drehfesten Bauteil und einem drehbaren Bauteil übertragbar sind. Hierdurch ist für den jeweils zu schmierenden und kühlenden Bereich Hydraulikfluid mit einem gewünschten Druck und einem gewünschten Volumenstrom zur Verfügung stellbar.

Ein Nachteil dieser Ausführung ist die unerwünscht große Leckage zwischen dem drehfesten Bauteil und dem drehbaren Bauteil, die durch im Betrieb vorliegende große Drücke und Volumenströme im Bereich der Schnittstelle zwischen den Bauteilen bedingt ist. Ein Druck im Bereich der zur Versorgung der Zahneingriffe vorgesehenen Leitung ist hierbei größer als bei den Ausführungen, bei denen der Druck zur Schmierung und Kühlung der Zahneingriffe stromab durch eine Dichteinrichtung erhöht wird, wodurch eine nachteilhaft große Leckage bedingt ist. Zudem geht durch die Leckage ein Druckverlust einher, der im Bereich der Kopplung zwischen dem drehfesten Bauteil und dem rotierenden Bauteil auftritt und einen Wirkungsgrad in unerwünschter Weise reduziert. Die Druckverluste sind dabei umso höher, je größer die zu übertragenden Volumenströme zwischen solchen Bauteilen sind.

Der vorliegenden Erfindung liegt daher die Aufgabe zugrunde, eine Vorrichtung mit einem drehfesten ersten Bauteil und einem zumindest bereichsweise mit dem ersten Bauteil drehbar verbundenen zweiten Bauteil zur Verfügung zu stellen, bei der Hydraulikfluid mit verschieden großen Drücken und Volumenströmen zwischen den Bauteilen in gewünschtem Umfang auf konstruktiv einfache Weise übertragbar ist, wobei die Vorrichtung auch bei großen bereitgestellten Drücken und Volumenströmen ausfallsicher und durch einen hohen Wirkungsgrad gekennzeichnet ist.

Erfindungsgemäß wird diese Aufgabe mit einer Vorrichtung mit den Merkmalen des Patentanspruchs 1 gelöst.

Bei der erfindungsgemäßen Vorrichtung mit einem drehfesten ersten Bauteil und einem zumindest bereichsweise mit dem ersten Bauteil drehbar verbundenen zweiten Bauteil ist Hydraulikfluid über das erste Bauteil und das zweite Bauteil zu Schmierstellen führbar. Eine Schnittstelle zwischen den Bauteilen weist einen ersten Überleitungsbereich und einen zweiten, in axialer Erstreckung der Bauteile zu dem ersten Überleitungsbereich beabstandeten Überleitungsbereich auf. Der erste Überleitungsbereich ist im Betrieb mit einem Druck beaufschlagt, der größer als ein Druck ist, mit dem der zweite Überleitungsbereich im Betrieb beaufschlagt ist. Die Überleitungsbereiche sind jeweils von sich in radialer Richtung übergreifenden Bereichen der Bauteile begrenzt, führen im Betrieb Hydraulikfluid, stehen sowohl mit Zuführbereichen für Hydraulikfluid des ersten Bauteils als auch mit Übertragungsbereichen für Hydraulikfluid des zweiten Bauteiles in Verbindung und bilden den Hydraulikfluid führenden Bereich einer zumindest schwimmenden hydrodynamischen Lagerung zwischen den Bauteilen.

Erfindungsgemäß ist im Bereich der Schnittstelle in axialer Erstreckung der Bauteile zwischen dem ersten Überleitungsbereich und dem zweiten Überleitungsbereich eine Dichteinrichtung angeordnet, die im Bereich einer einer Oberfläche des ersten Bauteiles oder des zweiten Bauteiles zugewandten Oberfläche des zweiten Bauteiles oder des ersten Bauteiles mit wenigstens einem Gewindebereich ausgebildet ist.

Bei der erfindungsgemäßen Vorrichtung ist der erste Überleitungsbereich mittels der Dichteinrichtung im Betrieb auf konstruktiv einfache Weise mit hoher Dichtwirkung verschleißfrei gegenüber dem zweiten Überleitungsbereich abgedichtet, so dass eine Leckage zwischen dem ersten Überleitungsbereich und dem zweiten Überleitungsbereich und hierdurch auch ein Druckabfall im Bereich der Schnittstelle vorteilhaft gering und ein Wirkungsgrad der Vorrichtung somit entsprechend hoch ist. Da zwischen dem ersten Überleitungsbereich und dem zweiten Überleitungsbereich ein geringerer Druckunterschied vergleichbar zu einem Druckunterschied zwischen dem ersten Überleitungsbereich und der Umgebung vorliegt, weist die Dichteinrichtung zudem eine vorteilhafterweise hohe Lebensdauer auf, so dass die Ölversorgung durch eine niedrige Ausfallwahrscheinlichkeit gekennzeichnet ist.

Sowohl der erste Überleitungsbereich als auch der zweite Überleitungsbereich stellen dabei einen unter Druck stehenden Hydraulikfluidring dar, wobei der durch den zweiten Überleitungsbereich gebildete Hydraulikfluidring im Betrieb einen niedrigeren Druck als der durch den ersten Überleitungsbereich gebildete Hydraulikfluidring aufweist und auf der dem zweiten Überleitungsbereich zugewandten Seite des ersten Überleitungsbereich eine Abdichtfunktion für den durch den ersten Überleitungsbereich gebildeten Hydraulikfluidring darstellt.

Der zweite Überleitungsbereich der Schnittstelle wird bei der erfindungsgemäßen Vorrichtung von dem wenigstens einen Gewindebereich berührungsfrei gegenüber dem ersten Überleitungsbereich der Schnittstelle abgedichtet. Da hohe Drehgeschwindigkeiten des zweiten Bauteils sowohl die Wirkungsweise der selbstzentrierenden hydrodynamischen Ölverbindung zwischen den beiden Bauteilen begünstigen als auch die Dichtwirkung im Gewindebereich erhöhen, ist die erfindungsgemäße Vorrichtung insbesondere für Anwendungen geeignet, bei welchen hohe Drehgeschwindigkeiten auftreten.

Grundsätzlich ist die erfindungsgemäße Ausführung der Vorrichtung in besonderem Umfang auch dazu geeignet, Hydraulikfluid mittels mehrerer Leitungen ausgehend von einem gehäusefesten Bereich in Hydraulikfluid führende Bereiche eines Planetenträgers zu überführen, der drehbar in dem Gehäusebereich oder auf dem Gehäusebereich angeordnet ist, um von dort aus verschiedene Schmierstellen, wie beispielsweise Zahneingriffe und weitere schmier- und kühlintensive Bereiche eines Planetengetriebes und insbesondere Gleitlagereinrichtungen mit Hydraulikfluid versorgen zu können. Die erfindungsgemäße Vorrichtung kann insbesondere bei Flugtriebwerken und Schifftriebwerken zum Einsatz kommen.

Bei einer vorteilhaften Ausführung der erfindungsgemäßen Vorrichtung sind zwei zweite Überleitungsbereiche vorgesehen, wobei die zweiten Überleitungsbereiche in axialer Erstreckung der Bauteile beidseits des ersten Überleitungsbereichs angeordnet sind. Auf diese Weise ist der im Betrieb im Bereich des ersten Überleitungsbereich vorliegende hohe Druck beidseits durch einen im Betrieb im Bereich der zweiten Überleitungsbereiche vorliegenden niedrigen Druck eingefasst, so dass der erste Überleitungsbereich vorteilhafterweise von der Umgebung entkoppelt ist und beidseits des ersten Überleitungsbereichs eine vorteilhafterweise kleine Druckdifferenz mit einer entsprechend guten Dichtwirkung vorliegt.

Vorzugsweise ist zwischen beiden zweiten Überleitungsbereichen und dem ersten Überleitungsbereich im Bereich der Schnittstelle jeweils ein Gewindebereich angeordnet, so dass der erste Überleitungsbereich der Schnittstelle in axialer Erstreckung der Bauteile zwischen wenigstens zwei Gewindebereichen der Dichteinrichtung angeordnet ist. Die Gewindebereiche sind hierbei durch die im Betrieb vorliegende geringe Druckdifferenz zwischen dem ersten Überleitungsbereich und dem zweiten Überleitungsbereich jeweils durch eine hohe Lebensdauer gekennzeichnet. Die zweiten Überleitungsbereiche können stromab der Schnittstelle der Bauteile sowohl zusammengeführt sein als auch separat zur Führung von Hydraulikfluid zu Verbrauchern geführt sein.

Auf einer bezüglich der axialen Erstreckung der Bauteile dem ersten Überleitungsbereich abgewandten Seite des zweiten Überleitungsbereiches ist bei einer Weiterbildung der Erfindung ein weiterer Gewindebereich der Dichteinrichtung angeordnet, mittels dem der zweite Überleitungsbereich ausfallsicher und berührungsfrei gegenüber der Umgebung der Bauteile abdichtbar ist. Der zweite Überleitungsbereich der Schnittstelle ist hierbei in axialer Erstreckung der Bauteile zwischen zwei Gewindebereichen der Dichteinrichtung angeordnet.

Erhöhen sich die Steigung und die Höhe von Gewindegängen des Gewindebereichs oder der Gewindebereiche mit zunehmendem Abstand von dem ersten Überleitungsbereich, wird das Hydraulikfluid aufgrund der erfindungsgemäß variierenden Gewindesteigung und der ebenfalls veränderten Gewindetiefe in den vom ersten Überleitungsbereich abgewandten Bereichen des Gewindebereichs stärker beschleunigt und mit höherer Geschwindigkeit in Richtung des ersten Überleitungsbereichs zurückgeführt. Gleichzeitig liegt aufgrund der in Abhängigkeit des Abstandes vom jeweiligen Überleitungsbereich variierenden konstruktiven Ausführung des Gewindebereiches für eine auf einer der Umgebung zugewandten Seite des jeweiligen Überleitungsbereichs angeordneten Gewindebereich in den dem jeweiligen Überleitungsbereich der Schnittstelle nahen Bereichen des Gewindebereichs ein höherer Druck vor, der einem Einströmen von Hydraulikfluid ausgehend vom jeweiligen Überleitungsbereich der Schnittstelle in einen Zwischenraum zwischen dem Gewindebereich des ersten Bauteils oder des zweiten Bauteils und der zugeordneten Oberfläche des zweiten Bauteils oder des ersten Bauteils entgegenwirkt. Damit wird eine Strömung von Hydraulikfluid ausgehend vom ersten Überleitungsbereich in Richtung des zweiten Überleitungsbereichs bzw. vom zweiten Überleitungsbereich in Richtung der Umgebung der Bauteile wirkungsvoll auf konstruktiv einfache Art und Weise vermieden. Dagegen wird im Betrieb über die Gewindebereiche Öl von den zweiten Überleitungsbereichen in Richtung des ersten Überleitungsbereichs gefördert, wodurch eine Dichtwirkung der Dichteinrichtung erhöht ist und der erste Überleitungsbereich auch bei reduziertem, im ersten Überleitungsbereich anliegendem Druck mit Hydraulikfluid versorgt ist. Zusätzlich ist bei einer Ausführung, bei der beidseits des ersten Überleitungsbereichs ein zweiter Überleitungsbereich angeordnet ist, durch die Förderung von Öl von den zweiten Überleitungsbereichen in Richtung des ersten Überleitungsbereichs ein Druck im Bereich des ersten Überleitungsbereichs erhöhbar. Hierdurch wird die Ausfallsicherheit des Systems vorteilhafterweise erhöht.

Der Gewindebereich weist bei einer durch eine hohe Dichtwirkung gekennzeichneten Ausführungsform der erfindungsgemäßen Vorrichtung ein mehrgängiges Gewinde auf.

Bei einer konstruktiv einfachen Ausführung einer erfindungsgemäßen Vorrichtung sind an die Übertragungsbereiche des ersten Überleitungsbereichs und des zweiten Überleitungsbereichs im Wesentlichen in axialer Erstreckung des zweiten Bauteils in dem zweiten Bauteil verlaufende Leitungen vorgesehen, mittels denen Hydraulikfluid den jeweiligen Schmierstellen zuführbar ist.

Umfasst die Vorrichtung mehrere über den Umfang des ersten Bauteils symmetrisch verteilt angeordnete Ölzuführbereiche für insbesondere jeden Überleitungsbereich, sind die Querschnitte der Ölzuführbereiche, die bei einer Anwendung der Vorrichtung im Bereich eines Flugtriebwerks durch den Kernstrom zu führen sind, mit einem gewünscht kleinen Durchmesser ausführbar, womit eine geringere Beschränkung des Strömungsquerschnitts des Kernstroms und damit eine geringere Blockade des Kernstroms sowie eine höhere Strömungsgeschwindigkeit des Ölvolumenstroms durch die mehreren Ölzuführbereiche erzielbar ist. Die höhere Strömungsgeschwindigkeit führt vorteilhafterweise wiederum zu einer verbesserten Öl- und Druckverteilung im jeweiligen Hydraulikfluidvolumenstrom und begünstigt damit sowohl das Lagerverhalten der schwimmenden hydrodynamischen Lagerung des zweiten Bauteils am ersten Bauteil als auch die Dichtwirkung der Dichteinrichtung.

Die mit den Ölzuführbereichen verbundenen Leitungen des ersten Überleitungsbereichs und die mit den Ölzuführbereichen verbundenen Leitungen des zweiten Überleitungsbereichs sind bei einer bauraumgünstigen und einfach zu fertigenden Ausführung der erfindungsgemäßen Vorrichtung in Umfangsrichtung des zweiten Bauteils abwechselnd zueinander angeordnet.

Der die Überleitungsbereiche der Schnittstelle begrenzende Bereich des ersten Bauteils ist innerhalb des den Überleitungsbereich der Schnittstelle mitbegrenzenden Bereichs des zweiten Bauteils angeordnet oder der Bereich des zweiten Bauteils ist innerhalb des Bereichs des ersten Bauteils angeordnet, womit die erfindungsgemäße Vorrichtung auf einfache Art und Weise an den jeweils vorliegenden Anwendungsfall angepasst ausführbar ist.

Das Hydraulikfluid ist bei weiteren vorteilhaften Ausführungsformen der erfindungsgemäßen Vorrichtung über das erste Bauteil und die Schnittstelle radial von innen nach außen oder von außen nach innen in das zweite Bauteil hinein führbar.

Bei einer vorteilhaften Weiterbildung der erfindungsgemäßen Vorrichtung ist in zumindest einem dem weiteren Gewindebereich nahen Bereich des ersten Bauteils und/oder des zweiten Bauteils wenigstens ein im Bereich der Schnittstelle mündender Rückführbereich vorgesehen, der die Schnittstelle mit einem von der Schnittstelle abgewandten Bereich des weiteren Gewindebereichs verbindet. Über den Rückführbereich wird auf einfache Art und Weise vermieden, dass der auf die den weiteren Gewindebereich umfassende Dichteinrichtung wirkende Druck reduziert wird und eine verschleißfreie Druckbarriere nahe der primären Ölzuführpassage des ersten Bauteils vorliegt, über die der zweite Überleitungsbereich der Schnittstelle abgedichtet wird. Über den Rückführbereich wird auf konstruktiv einfache Art und Weise ein aus einer vorliegenden Druckdifferenz, die durch den beim Durchströmen der Schnittstelle durch das Hydraulikfluid auftretenden Unterdruck entsteht, zwischen der Schnittstelle und dem von dem zweiten Überleitungsbereich der Schnittstelle abgewandten Bereich des weiteren Gewindebereichs resultierendes Ansaugen von Fluid aus der Umgebung der Bauteile in Richtung des zweiten Überleitungsbereichs verhindert, da über den Rückführbereich Hydraulikfluid ausgehend von der Schnittstelle zu dem von dem zweiten Überleitungsbereich der Schnittstelle abgewandten Bereich des weiteren Gewindebereichs und anschließend über den weiteren Gewindebereich zurück zum zweiten Überleitungsbereich führbar ist.

Der Rückführbereich ist bei einer konstruktiv einfachen und mit geringem Aufwand herstellbaren Weiterbildung der erfindungsgemäßen Vorrichtung als Kanal oder als Bohrung im ersten Bauteil und/oder im zweiten Bauteil ausgebildet.

Ist das zweite Bauteil mit in im Wesentlichen radialer Richtung verlaufenden Schaufelbereichen ausgeführt, zwischen welchen die Übertragungsbereiche vorgesehen sind, ist Hydraulikfluid ausgehend vom jeweiligen Überleitungsbereich der Schnittstelle in Richtung der Schmierstellen unter Nutzung der rotatorischen Energie des zweiten Bauteils weiterleitbar.

Verringern sich Strömungsquerschnitte der Übertragungsbereiche in Strömungsrichtung des Hydraulikfluids in den Übertragungsbereichen ausgehend von der Schnittstelle in Richtung der Schmierstellen, wird die rotatorische Energie des zweiten Bauteils in gewünschtem Umfang zum Fördern des Hydraulikfluids genutzt und ein Druckabfall im Bereich der Vorrichtung reduziert.

Sind die Übertragungsbereiche unter einem definierten Winkel in radialer Richtung im zweiten Bauteil verlaufend angeordnet, um das Hydraulikfluid entgegen der Rotationsrichtung des zweiten Bauteils in radialer Richtung durch die Übertragungsbereiche zu führen, wird das Hydraulikfluid mit hohem Wirkungsgrad vom Überleitungsbereich der Schnittstelle in Richtung der Schmierstellen durch das zweite Bauteil geleitet.

Bei einer vorteilhaften Ausführung einer erfindungsgemäßen Vorrichtung ist auf der dem ersten Überleitungsbereich abgewandten Seite des zweiten Überleitungsbereichs eine weitere, vorzugsweise einen Dichtring umfassende Dichteinrichtung vorgesehen, die insbesondere auf einer dem ersten Überleitungsbereich abgewandten Seite eines weiteren Gewindebereichs angeordnet ist. Hierdurch ist der zweite Überleitungsbereich der Schnittstelle neben der eine robuste dynamische Dichtfunktion zur Verfügung stellenden Dichteinrichtung auch über eine statische Dichtung gegenüber der Umgebung abgedichtet.

Ist das erste Bauteil über Bolzenelemente gegen Verdrehen in Langlöchern gehalten, sind beispielsweise radiale Auslenkungen eines Triebwerks und relative Bewegungen in definierten Grenzen möglich. Sind die Bolzenelemente an den geraden Flanken der Langlöcher anliegend angeordnet, wird ein bolzenseitiges Zentrieren des ersten Bauteils anstelle des zweiten Bauteils verhindert.

Bei kostengünstig herstellbaren Ausführungsformen der erfindungsgemäßen Vorrichtung sind das erste Bauteil und das zweite Bauteil mittels eines ALM-Verfahrens bzw. mittels eines 3D-Druckverfahrens und/oder mittels maschineller Fertigungsverfahren hergestellt, wobei mittels ALM-Prozessen bzw. 3D-Druckverfahren komplexe integrierte Ölzuführeinrichtungen darstellbar sind.

Sowohl die in den Patentansprüchen angegebenen Merkmale als auch die in den nachfolgenden Ausführungsbeispielen der erfindungsgemäßen Vorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Vorrichtung ergeben sich aus den Patentansprüchen und aus den nachfolgend unter Bezugnahme auf die Zeichnung prinzipmäßig beschriebenen Ausführungsbeispielen, wobei in der Beschreibung der Ausführungsbeispiele zugunsten der Übersichtlichkeit für bau- und funktionsgleiche Bauteile dieselben Bezugszeichen verwendet werden.

Es zeigt:
- Fig. 1: eine stark schematisierte Teillängsschnittansicht eines Flugtriebwerks mit einer Vorrichtung gemäß der Erfindung;
- Fig. 2: eine vereinfachte Längsschnittansicht eines Ausschnitts des Flugtriebwerks gemäß Fig. 1, wobei eine erste Ausführungsform der erfindungsgemäßen Vorrichtung gezeigt ist;
- Fig. 3: eine Querschnittansicht der Vorrichtung gemäß Fig. 2 entlang einer in Fig. 2 näher gekennzeichneten Schnittebene III-III;
- Fig. 4: eine vereinfachte Längsschnittansicht einer zweiten Ausführungsform der erfindungsgemäßen Vorrichtung;
- Fig. 5: eine Querschnittansicht der Vorrichtung gemäß Fig. 4 entlang einer in Fig. 4 näher gekennzeichneten Schnittebene V-V;
- Fig. 6: eine vereinfachte Längsschnittansicht einer dritten Ausführungsform der erfindungsgemäßen Vorrichtung;
- Fig. 7: eine Querschnittansicht der Vorrichtung gemäß Fig. 6 entlang einer in Fig. 6 näher gekennzeichneten Schnittebene VII-VII;
- Fig. 8: eine vereinfachte Längsschnittansicht einer vierten Ausführungsform der erfindungsgemäßen Vorrichtung; und
- Fig. 9: eine Querschnittansicht der Vorrichtung gemäß Fig. 8 entlang einer in Fig. 8 näher gekennzeichneten Schnittebene IX-IX.

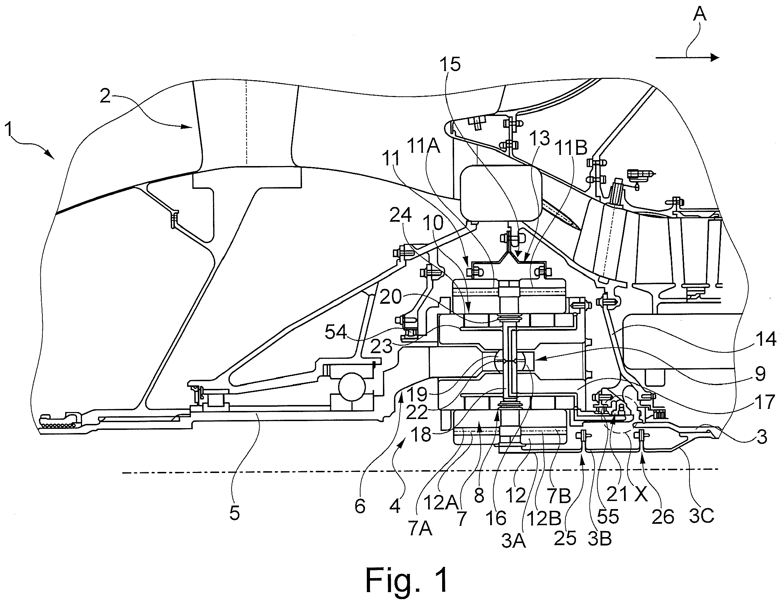

Fig. 1 zeigt eine Teillängsschnittansicht eines Flugtriebwerks 1, die einen vorderen Bereich des vorliegend als Gasturbinenmaschine ausgeführten Flugtriebwerks darstellt. Das Flugtriebwerk 1 ist in einem hinteren Bereich mit einer nicht näher dargestellten Kompressoreinrichtung und in einem vorderen Bereich mit einer Bläsereinrichtung ausgeführt. Die Bläsereinrichtung 2 ist von der Kompressoreinrichtung antreibbar, wobei die Kompressoreinrichtung hierfür im Bereich einer Kompressorwelle 3 über ein Umlaufgetriebe 4 mit einer Bläserwelle 5 in Verbindung steht. Ein Planetensteg 6 des Umlaufgetriebes 4 ist über in Planetenrädern 7 angeordnete Lagereinrichtungen 8 mit den Planetenrädern 7 verbunden, die in an sich bekannter Art und Weise drehbar auf dem Planetensteg 6 angeordnet sind.

Die Lagereinrichtungen 8 umfassen jeweils eine sphärische Lagereinheit 9 zum Ausgleich von Kippbewegungen zwischen dem Planetenträger bzw. dem Planetensteg 6 und den Planetenrädern 7 und eine weitere Lagereinheit 10 zur Drehentkopplung zwischen dem Planetenträger 6 und den Planetenrädern 7. Der Planetenträger 6 ist mit der Bläserwelle 5 drehfest verbunden, während ein Sonnenrad 12 des Umlaufgetriebes 4 drehfest mit der Kompressorwelle 3 wirkverbunden ist.

Ein Hohlrad 11 des Umlaufgetriebes 4 ist über eine flexible Verbindungseinrichtung 13 gehäuseseitig drehfest gehalten. Im Bereich der Verbindungseinrichtung 13 sind Bewegungen zwischen dem Hohlrad 11 und einem Gehäuse 14 in radialer und in axialer Richtung wenigstens annähernd kompensierbar bzw. ausgleichbar, womit Zahneingriffe im Bereich zwischen den Planetenrädern 7 und dem Hohlrad 11 sowie zwischen den Planetenrädern 7 und dem Sonnenrad 12 unabhängig von im Bereich des Gehäuses 14 durch angreifende Lasten verursachte Bewegungen des Gehäuses in gewünschtem Umfang störungsfrei vorliegen und die Planetenräder 7 sowohl mit dem Hohlrad 11 als auch mit dem Sonnenrad 12 möglichst verlustfrei und mit geringem Verschleiß kämmen.

Die flexible Verbindungseinrichtung 13 umfasst einen im Querschnitt wenigstens annähernd u-förmig ausgeführten Bereich 15, der sowohl in axialer Richtung als auch in radialer Richtung des Flugtriebwerks 1 die gewünschte flexible Anbindung des Hohlrads 11 am Gehäuse 14 ermöglicht und gleichzeitig in Umfangsrichtung entsprechend steif ausgeführt ist, um im Betrieb des Flugtriebwerks 1 im Bereich des Umlaufgetriebes 4 auftretende Reaktionsmomente in gewünschtem Umfang über das Hohlrad 11 im Bereich des Gehäuses 14 abstützen zu können.

Der Planetenträger 6 greift mit fingerartigen Bereichen 16 in die Planetenräder 7 ein, wobei der Planetenträger 6 vorliegend mit den fingerartigen Bereichen 16 mit den sphärischen Lagereinheiten 9 verbunden ist und über diese mit ebenfalls radial innerhalb der Planetenräder 7 angeordneten Innenlagerelementen 17 in Wirkverbindung steht. Die Innenlagerelemente 17 sind über die zwischen den Planetenrädern 7 und den Innenlagerelementen 17 angeordneten weiteren Lagereinheiten 10 drehbar mit den Planetenrädern 7 verbunden, stellen im Wesentlichen einen Teil des Planetenträgers 6 dar und laufen mit dem Planetenträger 6 um. Zusätzlich ist der Planetenträger 6 im Bereich der fingerartigen Bereiche 16 über in radialer Richtung des Umlaufgetriebes 4 verlaufend angeordnete Bolzenelemente 18 jeweils mit den Innenlagerelementen 17 gekoppelt. Dabei fluchten die Bolzenelemente 18 jeweils in etwa mit der Mitte der Planetenräder 7 und durchgreifen jeweils ein mit einem im Bereich der fingerartigen Bereiche 16 des Planetenträgers 6 angeordnetes und zumindest bereichsweise sphärisch ausgeführtes Koppelelement 19 der sphärischen Lagereinheiten 9, womit der Planetensteg 6 auch mit den Innenlagerelementen 17 verbunden ist. Zusätzlich sind die Bolzenelemente 18 im Bereich der Innenlagerelemente 17 vorliegend über Federringe 20 in radialer Richtung des Umlaufgetriebes 4 im Bereich der Innenlagerelemente 17 gesichert, um die Wirkverbindung zwischen dem Planetensteg 6 und den Innenlagerelementen 17 bei rotierenden Planetenrädern 7 über den gesamten Betriebsbereich des Flugtriebwerks 1 gewährleisten zu können. Die weiteren Lagereinheiten 10 sind vorliegend als Zylinderrollenlager ausgeführt, in deren Bereichen Radialkräfte in gewünschtem Umfang zwischen den Planetenrädern 7 und dem Planetensteg 6 übertragbar sind.

Sowohl die Planetenräder 7, das Sonnenrad 12 als auch das Hohlrad 11 sind jeweils mit zwei voneinander getrennten und in axialer Richtung voneinander beabstandeten schrägverzahnten Zahnbereichen 7A und 7B, 11A und 11 B sowie 12A und 12B ausgeführt. Die Schrägungswinkel der Zahnbereiche 7A und 7B der Planetenräder 7, der Zahnbereiche 11A und 11 B des Hohlrads 11 und der Zahnbereiche 12A und 12B des Sonnenrads 12 sind zur Minimierung axialer Verzahnungskräfte gegengleich ausgeführt. Das bedeutet, dass Zähne der Zahnbereiche 7A und 7B sowie der Zahnbereiche 11A und 11 B und auch der Zahnbereiche 12A und 12B jeweils schräg angeordnet sind, wobei der Schrägungswinkel jeweils den gleichen Wert aufweist, jedoch jeweils spiegelbildlich zu dem korrespondierenden Zahnbereich der Planetenräder 7, des Hohlrads 11 und des Sonnenrads 12 ausgeführt ist.

Der Planetenträger 6 des Umlaufgetriebes 4 ist vorliegend im Bereich von zwei Lagereinheiten 54, 55 gelagert, zwischen welchen das Umlaufgetriebe 4 angeordnet ist und in deren Bereich die am Planetenträger 6 angreifenden Belastungen in das Gehäuse 14 eingeleitet bzw. abgestützt werden. Da der Planetenträger 6 im Bereich der Vorrichtung 21 mit verringerter Steifigkeit ausgebildet ist, ist die Vorrichtung 21 wie in Fig. 1 dargestellt außerhalb des zwischen den Lagereinheiten 54, 55 liegenden Bereiches vorgesehen.

Um im Bereich des Sonnenrads 12 angreifende Biegemomente auf ein Minimum reduzieren zu können, ist die Kompressorwelle 3 vorliegend in einem definierten Umfang biegeweich ausgeführt, dass eventuell vorliegende Exzentrizitäten zwischen der Kompressorwelle 3 und dem Sonnenrad 12 ausgleichbar sind, ohne übermäßige Fluchtungsfehler im Bereich der Keilwellenverbindung zwischen der Kompressorwelle 3 und dem Sonnenrad 12 zu erzeugen. Damit ist gewährleistet, dass das Sonnenrad 12 im Betrieb seine gewünschte Position einnimmt. Die Kompressorwelle 3 ist hierfür in mehrere über Flanschbereiche 25, 26 miteinander verbundene Bereiche 3A bis 3C aufgeteilt.

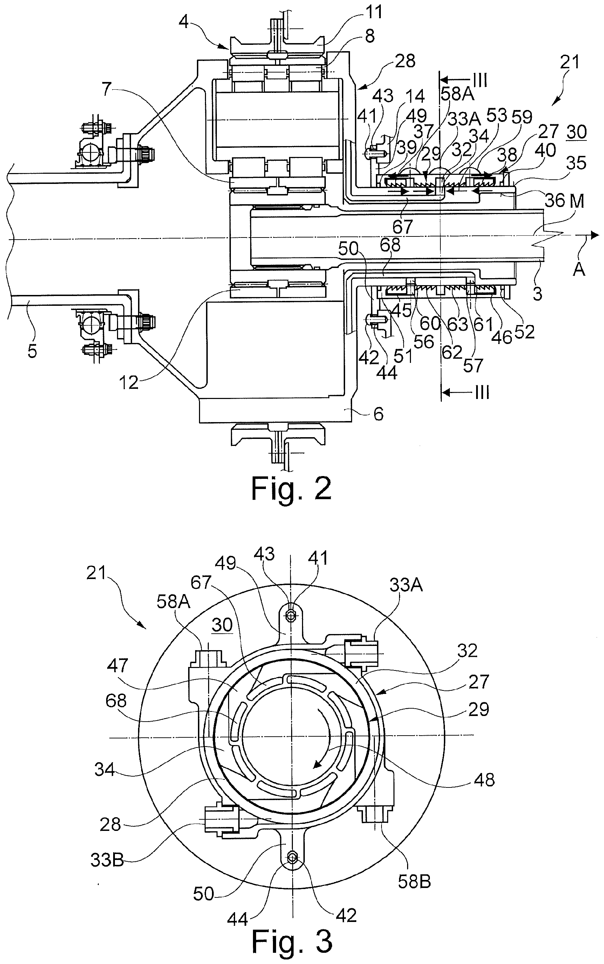

Zur Kühlung und Schmierung sowohl der Verzahnungen im Bereich des Umlaufgetriebes 4 als auch von insbesondere als Gleitlagereinrichtungen ausgeführten Lagereinrichtungen eines Hauptlastpfads in gewünschtem Umfang mit Schmier- und Kühlöl, wird über eine Vorrichtung 21, die in einem mit X gekennzeichneten Bereich des Flugtriebwerks 1 angeordnet ist, in der nachfolgend zu Fig. 2 bis Fig. 9 jeweils näher beschriebenen Art und Weise über separate Leitungen Hydraulikfluid aus dem Gehäuse 14 den zu kühlenden und schmierenden Bereichen des Flugtriebwerks 1 zugeführt.

Damit die Verzahnungen im Bereich des Umlaufgetriebes 4 in gewünschtem Umfang mit Schmier- und Kühlöl versorgbar sind, wird über die im Bereich X des Flugtriebwerks 1 angeordnete Vorrichtung 21 Hydraulikfluid aus dem Gehäuse 14 in die Innenlagerelemente 17 eingeleitet, die im Wesentlichen einen Teil des Planetenträgers 6 darstellen und mit dem Planetenträger 6 umlaufen. Hieran anschließend wird das Hydraulikfluid über in den Bolzenelementen 18 angeordnete Schmier- und Kühlölleitungen 22 in radialer Richtung des Umlaufgetriebes 4 von den sphärischen Lagereinheiten 9 in im Wesentlichen in axialer Richtung verlaufende weitere Leitungen 23 weitergeleitet. Von dort aus wird das Schmier- und Kühlöl wiederum in in radialer Richtung der Innenlagerelemente 17 verlaufenden zusätzlichen Leitungen 24 zu den weiteren Lagereinheiten 10 weitergeleitet. Dabei wird das Schmier- und Kühlöl im Betrieb des Flugtriebwerks 1 mithilfe der rotierenden Planetenräder 7 auch in Richtung der Zahneingriffe zwischen den Planetenrädern 7 und dem Hohlrad 11 sowie zwischen den Planetenrädern 7 und dem Sonnenrad 12 in gewünschtem Umfang weitergeleitet. Eine Versorgung der Lagereinrichtungen des Hauptlastpfads mit Schmier- und Kühlöl ist nicht näher gezeigt.

Fig. 2 und Fig. 3 zeigen eine erste Ausführungsform der Vorrichtung 21 mit einem drehfest mit dem Gehäuse 14 verbundenen ersten Bauteil 27 und mit einem bereichsweise mit dem ersten Bauteil 27 drehbar verbundenen zweiten Bauteil 28, das wiederum mit den Innenlagerelementen 17 drehfest verbunden ist, um Hydraulikfluid über das erste Bauteil 27 und das zweite Bauteil 28 zu den Schmierstellen führen zu können. Hierfür ist eine Schnittstelle 29 zwischen den beiden Bauteilen 27 und 28 gegenüber einer Umgebung 30 bzw. einem Innenraum des Flugtriebwerks 1 über eine Dichteinrichtung 31 in der nachfolgend näher beschriebenen Art und Weise abgedichtet.

Die Schnittstelle 29 umfasst einen von sich in radialer Richtung übergreifenden Bereichen der Bauteile 27 und 28 begrenzten und im Betrieb Hydraulikfluid führenden ersten Überleitungsbereich 32, der sowohl mit ersten Zuführbereichen 33A und 33B des ersten Bauteils 27 als auch mit ersten Übertragungsbereichen 34 für Hydraulikfluid des zweiten Bauteils 28 in Verbindung steht. Weiterhin umfasst die Schnittstelle 29 zwei zweite Überleitungsbereiche 56, 57, die ebenfalls von sich in radialer Richtung übergreifenden Bereichen der Bauteile 27 und 28 begrenzt sind und im Betrieb Hydraulikfluid führen, wobei ein zweiter Überleitungsbereich 56 bezüglich einer Hauptströmungsrichtung A von Luft in dem Flugtriebwerk 1 auf einer stromabseitigen Seite und ein zweiter Überleitungsbereich 57 bezüglich der Hauptströmungsrichtung A auf einer stromaufseitigen Seite des ersten Überleitungsbereichs 32 angeordnet ist. Ebenso wie der erste Überleitungsbereich 32 stehen auch die zweiten Überleitungsbereiche 56, 57 jeweils mit zweiten Zuführbereichen 58A und 58B bzw. 59 des ersten Bauteils 27 und mit zweiten Übertragungsbereichen 60 bzw. 61 für Hydraulikfluid des zweiten Bauteils 28 in Verbindung.

Der erste Überleitungsbereich 32 wird im Betrieb über die Zuführbereiche 33A, 33B mit einem größeren Druck und einem niedrigeren Volumenstrom versorgt als die zweiten Überleitungsbereiche 56, 57 über die Zuführbereiche 58A, 58B bzw. 59, so dass der erste Überleitungsbereich 32 einen Hochdruckbereich und die zweiten Überleitungsbereiche 56, 57 einen Niederdruckbereich darstellen. Über vorliegend in axialer Richtung in dem zweiten Bauteil 28 verlaufende und mit dem ersten Übertragungsbereich 34 verbundene Leitungen 67 wird im Betrieb Hydraulikfluid zur Schmierung und Kühlung der Zahnräder bzw. Zahneingriffe 7A, 7B, 11A, 11 B, 12A, 12B des Umlaufgetriebes 4, die einen hohen Öldruck und einen kleinen Ölvolumenstrom erfordern, geführt. Dagegen wird über ebenfalls in axialer Richtung in dem zweiten Bauteil 28 verlaufende Leitungen 68, die mit beiden zweiten Übertragungsbereichen 60, 61 verbunden sind, Hydraulikfluid zur Schmierung von Gleitlagern geführt, die einen niedrigeren Öldruck und einen höheren Ölvolumenstrom erfordern. Wie in Fig. 3 näher ersichtlich ist, sind in Umfangsrichtung der Bauteile 27, 28 vorliegend jeweils vier Leitungen 67 des Hochdruckbereichs und vier Leitungen 68 des Niederdruckbereichs vorgesehen, wobei jeweils eine Leitung 67 von zwei Leitungen 68 und umgekehrt eingefasst ist und die Leitungen 67 und 68 somit in Umfangsrichtung der Bauteile 27, 28 abwechselnd zueinander angeordnet sind.

Die Überleitungsbereiche 32, 56, 57 bilden den Öl bzw. Hydraulikfluid führenden Bereich einer schwimmenden hydrodynamischen Lagerung zwischen den Bauteilen 27 und 28, über die das Bauteil 28 im Wesentlichen berührungslos und verschleißfrei am drehfest ausgeführten Bauteil 27 gelagert ist. Vorliegend sind jedem Überleitungsbereich 32, 56, 57 zwei Zuführbereiche 33A, 33B, 58A, 58B, 59 zugeordnet, wobei auch drei, vier oder mehr Zuführbereiche pro Überleitungsbereich 32, 56, 57 vorgesehen sein können. Die jeweiligen Zuführbereiche 33A, 33B, 58A, 58B, 59 eines Überleitungsbereichs 32, 56, 57 sind vorliegend als flexible Schläuche ausgebildet und jeweils über den Umfang des ersten Bauteils 27 und des zweiten Bauteils 28 symmetrisch verteilt angeordnet, um ein gleichmäßiges Druckprofil über dem Umfang der Bauteile 27 und 28 zu erzeugen. Dies ist von Vorteil, da dann das zweite Bauteil 28 über ein hydrodynamisches Lager im ersten Bauteil 27 in radialer Richtung gelagert ist. In diesem Bereich liegt jedoch im Wesentlichen kein lasttragendes hydrodynamisches Gleitlager im eigentlichen Sinne vor. Über die schwimmende Lagerung des zweiten Bauteiles wird eine gute Abdichtung ohne mechanischen Kontakt erreicht.

Die Dichteinrichtung 31 ist im Bereich einer einer Oberfläche 35 des zweiten Bauteils 28 zugewandten Oberfläche 36 mit Gewindebereichen 62, 63 und weiteren Gewindebereichen 37, 38 ausgeführt. Die Gewindebereiche 62, 63 sind in axialer Erstreckung der Bauteile 27, 28 zwischen dem ersten Überleitungsbereich 32 und dem zweiten Überleitungsbereich 56 bzw. dem zweiten Überleitungsbereich 57 angeordnet, wohingegen die weiteren Gewindebereiche 37, 38 auf einer dem ersten Überleitungsbereich 32 abgewandten Seite des zweiten Überleitungsbereichs 56 bzw. des zweiten Überleitungsbereichs 57 angeordnet sind.

Mittels der Gewindebereiche 62, 63 ist der erste Überleitungsbereich 32 gegenüber den zweiten Überleitungsbereichen 56, 57 abgedichtet, wohingegen mittels der weiteren Gewindebereiche 37, 38 die zweiten Überleitungsbereiche 56, 57 in axialer Richtung gegenüber der Umgebung 30 abgedichtet sind. Die Gewindebereiche 37, 38, 62, 63 stellen dabei eine robuste dynamische Dichtfunktion zur Verfügung. Die Dichtfunktion der Dichteinrichtung 31 gegenüber einer Umgebung liegt auch dann vor, wenn statische Dichteinrichtungen 39 und 40 ausfallen. Die statischen Dichteinrichtungen 39 und 40 sind jeweils auf den dem ersten Überleitungsbereich 32 abgewandten Seiten der zweiten Überleitungsbereiche 56 bzw. 57 bzw. im Bereich von Enden des ersten Bauteils 27 bzw. der Gewindebereiche 37 und 38 vorgesehen und stellen bei dichtender Dichteinrichtung 31 lediglich sogenannte backup-Dichtungen dar. Des Weiteren sind die weiteren Dichteinrichtungen 39 und 40 in axialer Richtung von Scheibenelementen 49 und 50 in Nuten 51, 52 des ersten Bauteils 27 gehalten.

Die Vorrichtung 21 stellt eine schwimmende Ölkopplung zwischen dem ersten Bauteil 27 und dem zweiten Bauteil 28 her, um aus einem statischen bzw. nicht drehbaren Bereich bzw. dem ersten Bauteil 27 Hydraulikfluid in gewünschtem Umfang in einen rotierenden Bereich, d. h. vorliegend in das drehbare Bauteil 28 einzuleiten. Dabei ist das erste Bauteil 27 über mehrere Bolzenelemente 41, 42 drehfest im Bereich des Gehäuses 14 festgelegt, wobei die Bolzenelemente 41, 42 in Langlöchern 43, 44 angeordnet sind, um Gehäuseauslenkungen des Flugtriebwerks 1 und auch relative Bewegungen zwischen dem Gehäuse 14 und dem ersten Bauteil 27 sowie dem zweiten Bauteil 28 zu ermöglichen. Zusätzlich sind die Bolzenelemente 41 und 42 in Umfangsrichtung der Bauteile 27 und 28 an geraden Flanken der Langlöcher 43 und 44 anliegend angeordnet. Damit wird ein bolzenseitiges Zentrieren des statischen Ölzuführkopplungskörpers bzw. des ersten Bauteils 27 anstelle der Trägerwelle bzw. des zweiten Bauteils 28 verhindert.

Die radialen Abstände zwischen der statischen Kopplung und den rotierenden Bereichen bzw. zwischen den Oberflächen 35 und 36 der Bauteile 27 und 28 sind vorliegend fertigungstechnisch auf ein absolutes Minimum begrenzt, um den Ölabfluss im Bereich der Schnittstelle 29 der Bauteile 27, 28 in axialer Richtung zwischen dem ersten Überleitungsbereich 32 und den zweiten Überleitungsbereichen 56, 57 und zwischen den zweiten Überleitungsbereichen 56, 57 und der Umgebung zu minimieren und die Dichtwirkung der Dichteinrichtung 31 in gewünschtem Umfang zu erzielen. Zudem ist die im Wesentlichen berührungslose Dichteinrichtung 31 trotz der geringen Spaltmaße durch einen geringen Verschleiß gekennzeichnet. Die zwischen den Bauteilen 27 und 28 vorliegende hydrodynamische Selbstzentrierung gewährleistet ein schwimmendes statisches Gehäuse, das mit dem rotierenden Bauteil 28 ohne einen Metall-Metall-Kontakt eine besonders günstige verschleißfreie Anordnung bildet.

Die Gewindebereiche 62, 63 und die weiteren Gewindebereiche 37, 38 sind vorliegend jeweils mit eingängigen Gewinden ausgeführt und können auch mehrgängige Gewinde umfassen. Vorliegend sind die Gewindebereiche 37, 38, 62, 63 jeweils in ihren dem ersten Überleitungsbereich 32 abgewandten Enden mit einer höheren Gewindesteigung und mit einer größeren Gewindetiefe ausgebildet als in dem ersten Überleitungsbereich 32 zugewandten Bereichen. Dadurch, dass sich sowohl die Gewindesteigung als auch die Gewindetiefe mit abnehmendem Abstand zum ersten Überleitungsbereich 32 reduzieren, wird das Öl in den dem ersten Überleitungsbereich 32 abgewandten äußeren Bereichen der Gewindebereiche 37, 38, 62, 63 stärker beschleunigt und mit höherer Geschwindigkeit von den Gewindebereichen 62, 63 in Richtung des ersten Überleitungsbereichs 32 und von den weiteren Gewindebereichen 37, 38 in Richtung der zweiten Überleitungsbereiche 56, 57 zurückgeführt. In den dem ersten Überleitungsbereich 32 bzw. den zweiten Überleitungsbereichen 56, 57 nahen Bereichen der Gewindebereiche 37, 38, 62, 63 liegt dagegen ein höherer Fluiddruck vor, der einem Einströmen von Hydraulikfluid ausgehend vom ersten Überleitungsbereich 32 in den Zwischenraum zwischen den Gewindebereichen 62, 63 und dem zweiten Bauteil 28 bzw. einem Einströmen von Hydraulikfluid ausgehend von den zweiten Überleitungsbereichen 56, 57 in den Zwischenraum zwischen den weiteren Gewindebereichen 37, 38 und dem zweiten Bauteil 28 entgegenwirkt. Damit wird eine Strömung von Hydraulikfluid ausgehend vom ersten Überleitungsbereich 32 und eine Strömung von Hydraulikfluid ausgehend von den zweiten Überleitungsbereichen 32 entgegen der durch den Pfeil 53 gekennzeichneten Strömungsrichtung des Hydraulikfluids wirkungsvoll und auf einfache Art und Weise vermieden.

Mittels der vorgeschlagenen Anordnung des ersten Überleitungsbereichs 32 in axialer Richtung zwischen den zweiten Überleitungsbereichen 56, 57 kann auch für den Fall, dass im Betrieb Hydraulikfluid entgegen der Pfeilrichtung 53 von dem ersten Überleitungsbereich 32 in Richtung der zweiten Überleitungsbereiche 56, 57 geführt wird, ein Austritt von Hydraulikfluid durch die Schnittstelle 29 in axialer Richtung an die Umgebung 30 verhindert werden. Dies ist dadurch begründet, dass für den beschriebenen Fall Hydraulikfluid den zweiten Überleitungsbereichen 56, 57 zugeführt und über die Leitungen 68 in Richtung der Schmierstellen abgeführt wird. Zudem stellt der im Bereich der zweiten Überleitungsbereiche 56, 57 vorliegende Druck eine Druckbarriere für den ersten Überleitungsbereich 32 dar, wobei Hydraulikfluid von den zweiten Überleitungsbereichen 56, 57 in Richtung des ersten Überleitungsbereichs 32 gefördert wird und somit eine Dichtwirkung zwischen dem ersten Überleitungsbereich 32 und den zweiten Überleitungsbereichen 56, 57 unterstützt. Die Dichteinrichtung 31 ist zudem durch eine hohe Lebensdauer gekennzeichnet, da im Betrieb lediglich eine geringe Druckdifferenz zwischen dem im Bereich des ersten Überleitungsbereichs 32 vorliegenden Druck und einem im Betrieb im Bereich der zweiten Überleitungsbereiche 56, 57 vorliegenden Druck vorliegt, wobei diese Druckdifferenz zudem geringer als eine Druckdifferenz zwischen dem im Betrieb im Bereich des ersten Überleitungsbereichs 32 vorliegenden Druck und einem Umgebungsdruck ist.

Über die Gewindebereiche 62, 63 wird im Betrieb der seitens des ersten Überleitungsbereichs 32 auf die zweiten Überleitungsbereiche 56, 57 wirkende Druck reduziert und dadurch eine Hochdruckbarriere nahe der Zuführbereiche 33A und 33B erzeugt, die eine hohe Dichtwirkung zur Verfügung stellende dynamische Dichtung ausbildet.

Da das über die Zuführbereiche 33A, 33B in den zweiten Überleitungsbereichen 56, 57 einströmende und von dort in Richtung der zweiten Übertragungsbereiche 60, 61 des zweiten Bauteils 28 abfließende Hydraulikfluid im Bereich zwischen den weiteren Gewindebereichen 37 und 38 und dem zweiten Bauteil 28 einen Unterdruck erzeugt und ein Ansaugen von Luft über die Dichteinrichtung 31 ausgehend von der Umgebung 30 in Richtung der zweiten Überleitungsbereiche 56, 57 vermieden werden soll, sind in den den weiteren Gewindebereichen 37 und 38 nahen Bereichen des ersten Bauteils 27 im Bereich der Schnittstelle 29 mündende Rückführbereiche 45, 46 vorgesehen, die den Überleitungsbereich 32 mit von der Schnittstelle 29 abgewandten Bereichen der weiteren Gewindebereiche 37 und 38 verbinden. Über die Rückführbereiche 45 und 46 strömt das über die Zuführbereiche 33A, 33B unter Druck zugeführte Hydraulikfluid zum Teil von der Schnittstelle 29 in Richtung von in axialer Richtung von der Schnittstelle 29 abgewandten Enden der weiteren Gewindebereiche 37 und 38.

Das bedeutet, dass von der Schnittstelle 29 über die Rückführbereiche 45 und 46 Hydraulikfluid in Bereiche des ersten Bauteils 27 strömt, die zwischen den weiteren Gewindebereichen 37 und 38 und den weiteren Dichteinrichtungen 39 und 40 angeordnet sind. Dieses Hydraulikfluid wird dann durch den Unterdruck in Form eines Zirkulationsstroms, der von dem durch die zweiten Überleitungsbereiche 56, 57 strömenden Hydraulikfluid verursacht wird, ausgehend von der Schnittstelle 29 über die Rückführbereiche 45 und 46 und über die weiteren Gewindebereiche 37 und 38 zurück in den jeweiligen zweiten Überleitungsbereich 56, 57 geführt. Damit wird ein Ansaugen von Luft über die weiteren Dichteinrichtungen 39 und 40 und die weiteren Gewindebereiche 37 und 38 aus der Umgebung 30 auf konstruktiv einfache Art und Weise verhindert.

Über die weiteren Gewindebereiche 37 und 38 sowie die Rückführbereiche 45 und 46 wird der auf die Dichteinrichtung 31 und auch der auf die weiteren Dichteinrichtungen 39 und 40 wirkende Druck reduziert und zusätzlich eine Druckbarriere nahe der Zuführbereiche 58A, 58B bzw. 59 erzeugt, die eine hohe Dichtwirkung zur Verfügung stellende dynamische Dichtung ausbildet. Dadurch wird die Ausfallwahrscheinlichkeit reduziert und die Lebensdauer der Dichtringe aufweisenden weiteren Dichteinrichtungen 39 und 40 verbessert.

Die Rückführbereiche 45 und 46 sind in Abhängigkeit des jeweils vorliegenden Anwendungsfalls entweder im ersten Bauteil 27 oder im zweiten Bauteil 28 anordenbar, wobei jeweils die Anordnung ausgewählt wird, mit der jeweils der bessere Rückführdruck erzielt wird.

In Abhängigkeit des jeweils vorliegenden Anwendungsfalls ist die Vorrichtung 21 mit einem oder mit mehreren über den Umfang der Bauteile 27 und 28 verteilt angeordneten Rückführbereichen 45 und 46 ausgeführt, um das zuvor erwähnte Ansaugen von Luft aus der Umgebung über den gesamten Umfang der Bauteile 27 und 28 wirkungsvoll zu vermeiden.

Über die Rückführbereiche 45 und 46 wird Hydraulikfluid über die weiteren Gewindebereiche 37 und 38 in Richtung der zweiten Überleitungsbereiche 56, 57 geführt und zusätzlich im Bereich der weiteren Dichteinrichtungen 39 und 40 ein positiver Druck erzeugt, womit das Ansaugen von Luft aus der Umgebung 30 über die weiteren Dichteinrichtungen 39 und 40 und auch die weiteren Gewindebereiche 37 und 38 mit geringem Aufwand vermieden wird.

Die ersten Übertragungsbereiche 34 des zweiten Bauteils 28 sind in der in Fig. 3 dargestellten Art und Weise zwischen im Wesentlichen in radialer Richtung verlaufenden Schaufelbereichen 47 angeordnet bzw. werden von jeweils zwei Schaufelbereichen 47 begrenzt. Die Schaufelbereiche 47 sind in das zweite Bauteil 28 integriert bzw. mit diesem verbunden und in Drehrichtung 48 des zweiten Bauteils 28 radial nach außen gerichtet winkelig gegenüber der rein radialen Erstreckung des zweiten Bauteils 28 verlaufend ausgeführt. Aufgrund der winkeligen Anordnung der Schaufelbereiche 47 verengen sich die Strömungsquerschnitte der ersten Übertragungsbereiche 34 in Strömungsrichtung des Hydraulikfluids in den ersten Übertragungsbereichen 34 ausgehend von der Schnittstelle 29 in Richtung der Schmierstellen des Umlaufgetriebes 4 im dargestellten Umfang.

Das über die Zuführbereiche 33A und 33B unter Druck zugeführte Hydraulikfluid wird entgegen der Drehrichtung 48 des zweiten Bauteils 28 von der Schnittstelle 29 bzw. dessen erstem Überleitungsbereich 32 in die ersten Übertragungsbereiche 34 mit hoher Relativgeschwindigkeit gegenüber den Schaufelbereichen 47 eingeleitet. Die hohe Relativgeschwindigkeit zwischen dem Hydraulikfluid und den Schaufelbereichen 47, die unter anderem eine Funktion des Betriebszustandes des Zuführungsstroms ist, und die entgegengesetzte Drehrichtung 48 des zweiten Bauteils 28 sowie der Anstellwinkel und die Orientierung der Schaufelbereiche 47 gewährleisten, dass das Hydraulikfluid bei dem in Fig. 2 und Fig. 3 dargestellten Ausführungsbeispiel der Vorrichtung 21 durch das Bauteil 28 radial nach innen zu den Leitungen 67 geführt und in den ersten Übertragungsbereichen 34 bedruckt wird. Die Anzahl der Schaufelbereiche 47 des zweiten Bauteils 28 kann zur Abstimmung des Torsionsverhaltens des Umlaufgetriebes 4 ausgewählt werden.

Zusätzlich zu den vorgenannten Vorteilen, die durch die mehreren über den Umfang der Bauteile 27 und 28 verteilt angeordneten Zuführbereiche 33A und 33B erzielt werden, können die Durchmesser der Zuführbereiche 33A und 33B im Vergleich zur Vorsehung eines einzigen Zuführbereichs kleiner dimensioniert werden, ohne den Gesamtvolumenstrom dadurch zu begrenzen. Zuführleitungen mit kleinerem Durchmesser, die in Führungsschaufeln durch den Kernstrom des Flugtriebwerks 1 geführt werden, schränken den Querschnitt des Kernstroms in geringerem Umfang ein. Darüber hinaus wird Hydraulikfluid in den kleineren Strömungsquerschnitten der Zuführbereiche 33A, 33B mit einer höheren Strömungsgeschwindigkeit in die Schnittstelle 29 eingeleitet, wodurch wiederum eine verbesserte Öl- und Druckverteilung im Volumenstrom erreicht wird, der gegen die Drehrichtung des zweiten Bauteils 28 in die ersten Übertragungsbereiche 34 eingeleitet wird.

Den zweiten Überleitungsbereichen 56, 57 sind vergleichbar zu den Schaufelbereichen 47 des ersten Überleitungsbereichs 32 ausgeführte und in den Figuren nicht näher ersichtliche Schaufelbereiche zugeordnet, wobei die Schaufelbereiche der zweiten Überleitungsbereiche 32 bezüglich der Anordnung der Schaufelbereiche 47 in Fig. 3 um etwa 45° bezüglich einer Mittelachse M der Bauteile 27, 28 verdreht angeordnet sind. Die zwischen den Schaufelbereichen angeordneten Übertragungsbereiche 60, 61 münden in die Leitungen 68.

Durch die mittels der Schaufelbereiche 47 erzielte Geschwindigkeitsdifferenz wird stromab der Vorrichtung 21 ein für die Versorgung der jeweiligen Schmierstellen jeweils gewünscht hoher Versorgungsdruck erzielt, wobei über die durch die Rotation des zweiten Bauteils 28 zur Verfügung stehende additive Energie ein unerwünschter Druckabfall im Bereich der Vorrichtung 21 ohne zusätzlichen Aufwand verhindert wird. Sowohl die Form als auch die Anzahl der Zuführbereiche 33A, 33B, 58A, 58B, 59 werden so ausgelegt bzw. definiert, dass das Hydraulikfluid im jeweiligen Übertragungspfad des Hydraulikfluids aufgrund des vorliegenden Drucks und der dort jeweils vorliegenden Strömungsgeschwindigkeit mit hohem Wirkungsgrad übertragen wird. Des Weiteren werden auch die Zuführbereiche 33A, 33B, 58A, 58B, 59 und der Schaufelbereiche 47 aufeinander abgestimmt, um einen maximalen Druckanstieg des jeweiligen Übertragungspfads zu erreichen und einen maximalen Ölvolumenstrom durch die Vorrichtung 21 führen zu können.

Grundsätzlich besteht die Möglichkeit, die Bauteile 27 und 28 mittels eines sogenannten ALM-Verfahrens (Additive-Layer-Manufacturing) bzw. mittels eines 3D-Druckverfahrens herzustellen oder die Bauteile 27 und 28 mithilfe maschineller Fertigungsverfahren herzustellen, die die Zuführbereiche 33A, 33B, 58A, 58B, 59 aufweisen, wobei mittels ALM-Prozessen komplexe integrierte Ölzuführeinrichtungen herstellbar sind.

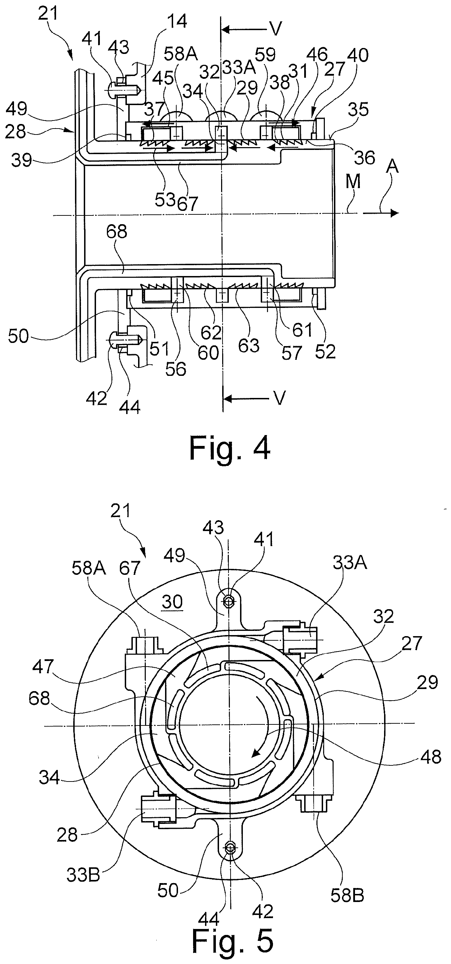

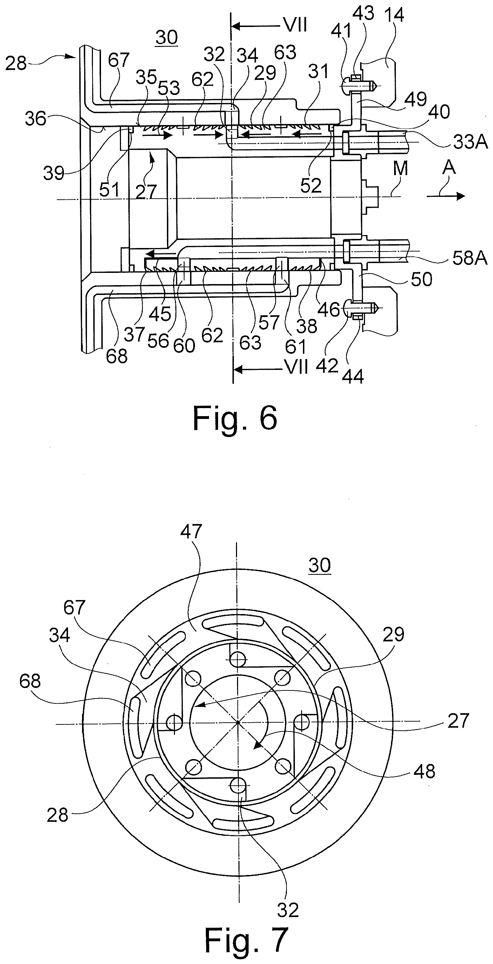

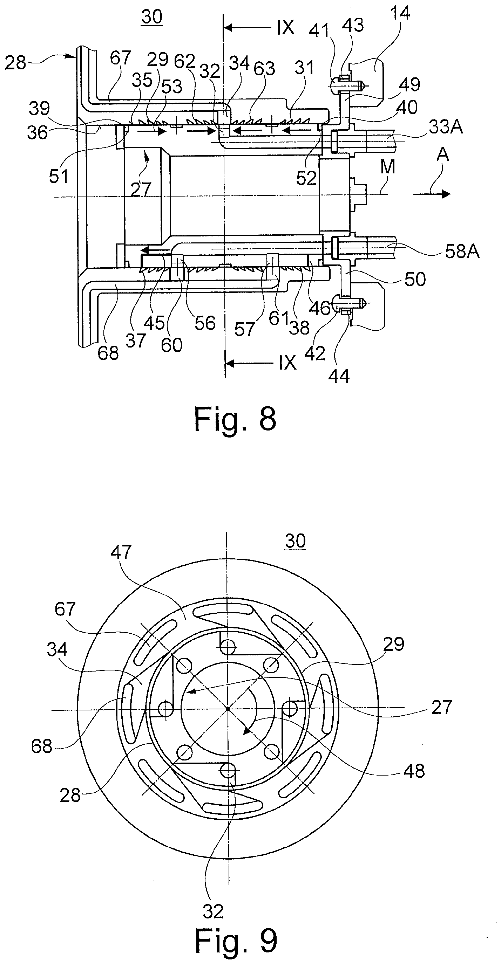

Fig. 4 und Fig. 5 zeigen ein zweites Ausführungsbeispiel der Vorrichtung 21, das im Wesentlichen der in Fig. 2 und Fig. 3 dargestellten ersten Ausführungsform der Vorrichtung 21 entspricht, weshalb in der nachfolgenden Beschreibung lediglich auf die Unterschiede zwischen den beiden Ausführungsformen der Vorrichtung 21 näher eingegangen wird und bezüglich der weiteren Funktionsweise der Vorrichtung 21 gemäß Fig. 4 und Fig. 5 auf die vorstehende Beschreibung zu Fig. 2 und Fig. 3 verwiesen wird. Gleiches gilt für das in Fig. 6 und Fig. 7 gezeigte dritte Ausführungsbeispiel der Vorrichtung 21 und das in Fig. 8 und Fig. 9 gezeigte vierte Ausführungsbeispiel der Vorrichtung 21.

Bei der Vorrichtung 21 gemäß Fig. 4 und Fig. 5 sind die Gewindebereiche 62 und 63 sowie die weiteren Gewindebereiche 37 und 38 im Bereich der Oberfläche 35 des zweiten Bauteils 28 angeordnet, um den ersten Überleitungsbereich 32 der Schnittstelle 29 im vorbeschriebenen Umfang gegenüber den zweiten Überleitungsbereichen 56 und 57 und die zweiten Überleitungsbereiche 56 und 57 gegenüber der Umgebung 30 der Bauteile 27 und 28 abzudichten, während die Rückführbereiche 45 und 46 in dem in der vorstehenden Beschreibung näher erläuterten Umfang im Bereich des ersten Bauteils 27 verlaufend vorgesehen sind.

Bei dem dritten Ausführungsbeispiel der Vorrichtung 21 gemäß Fig. 6 und Fig. 7 ist das erste Bauteil 27 radial innerhalb des zweiten Bauteils 28 angeordnet, womit das über die Zuführbereiche 33A, 58A der Schnittstelle 29 zugeführte Hydraulikfluid von innen über die Schnittstelle 29 radial nach außen in die ersten Übertragungsbereiche 34 bzw. die zweiten Übertragungsbereiche 60, 61 des zweiten Bauteils 28 geführt wird. Es können wiederum mehrere über den Umfang verteilt angeordnete erste Zuführbereiche 33A und 58A vorgesehen sein, wobei hierzu auf die Ausführungen gemäß Fig. 2 bis Fig. 5 verwiesen wird. Die Gewindebereiche 37, 38, 62, 63 sind wiederum wie bei der ersten Ausführung der Vorrichtung 21 gemäß Fig. 2 und Fig. 3 im Bereich des zweiten Bauteils 28 vorgesehen.

Bei dem in Fig. 8 und Fig. 9 gezeigten vierten Ausführungsbeispiel der Vorrichtung 21, das im Wesentlichen der in Fig. 6 und Fig. 7 dargestellten ersten Ausführungsform der Vorrichtung 21 entspricht, sind im Unterschied zu der Ausführung gemäß Fig. 6 und Fig. 7 die Gewindebereiche 37, 38, 62, 63 im Bereich des ersten Bauteiles 27 angeordnet.

### Bezugszeichenliste

- 1: Flugtriebwerk
- 2: Bläsereinrichtung
- 3: Kompressorwelle
- 3A bis 3C: Bereich der Kompressorwelle
- 4: Umlaufgetriebe
- 5: Bläserwelle
- 6: Planetensteg, Planetenträger
- 7: Planetenrad
- 7A, B: Zahnbereich des Planetenrads
- 8: Lagereinrichtung
- 9: sphärische Lagereinheit
- 10: weitere Lagereinheit
- 11: Hohlrad
- 11A, B: Zahnbereich des Hohlrads
- 12: Sonnenrad
- 12A, B: Zahnbereich des Sonnenrads
- 13: flexible Verbindungseinrichtung
- 14: Gehäuse
- 15: u-förmiger Bereich der flexiblen Verbindungseinrichtung
- 16: fingerartiger Bereich des Planetensteges
- 17: Innenlagerelement
- 18: Bolzenelement
- 19: sphärisches Koppelelement
- 20: Federring
- 21: Vorrichtung
- 22: Schmier- und Kühlölleitung
- 23: weitere Leitung
- 24: zusätzliche Leitung
- 25, 26: Flanschbereich
- 27: erstes Bauteil
- 28: zweites Bauteil
- 29: Schnittstelle
- 30: Umgebung
- 31: Dichteinrichtung
- 32: erster Überleitungsbereich
- 33A, 33B: erster Zuführbereich
- 34: erster Übertragungsbereich
- 35: Oberfläche des zweiten Bauteils
- 36: Oberfläche des ersten Bauteils
- 37, 38: weiterer Gewindebereich
- 39, 40: weitere Dichteinrichtung
- 41, 42: Bolzenelement
- 43, 44: Langloch
- 45, 46: Rückführbereich
- 47: Schaufelbereich
- 48: Drehrichtung
- 49, 50: Scheibenelement
- 51, 52: Nut
- 53: Strömungsrichtung
- 54, 55: Lagereinheit
- 56, 57: zweiter Überleitungsbereich
- 58A, 58B, 59: zweiter Zuführbereich
- 60, 61: zweiter Übertragungsbereich
- 62, 63: Gewindebereich
- 67, 68: Leitung
- A: Hauptströmungsrichtung
- M: Mittelachse

## Patentansprüche

1. Vorrichtung (21) mit einem drehfesten ersten Bauteil (27) und einem zumindest bereichsweise mit dem ersten Bauteil (27) drehbar verbundenen zweiten Bauteil (28), wobei Hydraulikfluid über das erste Bauteil (27) und das zweite Bauteil (28) zu Schmierstellen führbar ist, und wobei eine Schnittstelle (29) zwischen den Bauteilen (27, 28) einen ersten Überleitungsbereich (32) und einen zweiten, in axialer Erstreckung der Bauteile (27, 28) zu dem ersten Überleitungsbereich (32) beabstandeten Überleitungsbereich (56, 57) aufweist, wobei der erste Überleitungsbereich (32) im Betrieb mit einem Druck beaufschlagt ist, der größer als ein Druck ist, mit dem der zweite Überleitungsbereich (56, 57) im Betrieb beaufschlagt ist, und wobei die Überleitungsbereiche (32, 56, 57) jeweils von sich in radialer Richtung übergreifenden Bereichen der Bauteile (27, 28) begrenzt sind, im Betrieb Hydraulikfluid führen, sowohl mit Zuführbereichen (33A, 33B, 58A, 58B, 59) für Hydraulikfluid des ersten Bauteils (27) als auch mit Übertragungsbereichen (34, 60, 61) für Hydraulikfluid des zweiten Bauteiles (28) in Verbindung stehen und den Hydraulikfluid führenden Bereich einer zumindest schwimmenden hydrodynamischen Lagerung zwischen den Bauteilen (27, 28) bilden, **dadurch gekennzeichnet, dass** im Bereich der Schnittstelle (29) in axialer Erstreckung der Bauteile (27, 28) zwischen dem ersten Überleitungsbereich (32) und dem zweiten Überleitungsbereich (56, 57) eine Dichteinrichtung (31) angeordnet ist, die im Bereich einer einer Oberfläche (35 bzw. 36) des ersten Bauteiles (27) oder des zweiten Bauteiles (28) zugewandten Oberfläche (36 bzw. 35) des zweiten Bauteiles (28) oder des ersten Bauteiles (27) mit wenigstens einem Gewindebereich (62, 63) ausgebildet ist.

2. Vorrichtung nach Anspruch 1, **dadurch gekennzeichnet, dass** zwei zweite Überleitungsbereiche (56, 57) vorgesehen sind, die in axialer Erstreckung der Bauteile (27, 28) beidseits des ersten Überleitungsbereichs (32) angeordnet sind.

3. Vorrichtung nach einem der Ansprüche 1 oder 2, **dadurch gekennzeichnet, dass** auf einer dem ersten Überleitungsbereich (32) abgewandten Seite des zweiten Überleitungsbereiches (56, 57) ein weiterer Gewindebereich (37, 38) der Dichteinrichtung (31) angeordnet ist.

4. Vorrichtung nach einem der Ansprüche 1 bis 3, **dadurch gekennzeichnet, dass** die Steigung und die Höhe eines Gewindegangs eines Gewindebereichs (37, 38, 62, 63) mit zunehmendem Abstand von dem ersten Überleitungsbereich (32) ansteigt.

5. Vorrichtung nach einem der Ansprüche 1 bis 4, **dadurch gekennzeichnet, dass** ein Gewindebereich (37, 38, 62, 63) ein mehrgängiges Gewinde aufweist.

6. Vorrichtung nach einem der Ansprüche 1 bis 5, **dadurch gekennzeichnet, dass** an die Übertragungsbereiche (34, 60, 61) des ersten Überleitungsbereichs (32) und des zweiten Überleitungsbereichs (56, 57) im Wesentlichen in axialer Erstreckung des zweiten Bauteils (28) in dem zweiten Bauteil (28) verlaufende Leitungen (67, 68) vorgesehen sind.

7. Vorrichtung nach einem der Ansprüche 1 bis 6, **dadurch gekennzeichnet, dass** jedem Überleitungsbereich (32, 56, 57) mehrere über den Umfang des ersten Bauteils (27) verteilt angeordnete Ölzuführbereiche (33A, 33D, 58A, 58B, 59) zugeordnet sind.

8. Vorrichtung nach einem der Ansprüche 6 oder 7, **dadurch gekennzeichnet, dass** die mit den Ölzuführbereichen (33A, 33D) verbundenen Leitungen des ersten Überleitungsbereichs (32) und die mit den Ölzuführbereichen (58A, 58B, 59) verbundenen Leitungen (67, 68) des zweiten Überleitungsbereichs (56, 57) in Umfangsrichtung des zweiten Bauteils (28) abwechselnd zueinander angeordnet sind.

9. Vorrichtung nach einem der Ansprüche 1 bis 8, **dadurch gekennzeichnet, dass** der die Überleitungsbereiche (32, 56, 57) der Schnittstelle (29) begrenzende Bereich des ersten Bauteils (27) innerhalb des die Überleitungsbereiche (32, 56, 57) der Schnittstelle (29) mitbegrenzenden Bereichs des zweiten Bauteils (28) angeordnet ist, oder der Bereich des zweiten Bauteils (28) innerhalb des Bereichs des ersten Bauteils (27) angeordnet ist.

10. Vorrichtung nach einem der Ansprüche 1 bis 9, **dadurch gekennzeichnet, dass** das Hydraulikfluid über das erste Bauteil (27) und die Schnittstelle (29) radial von innen nach außen oder von außen nach innen in das zweite Bauteil (28) hinein führbar ist.

11. Vorrichtung nach einem der Ansprüche 1 bis 10, **dadurch gekennzeichnet, dass** in zumindest einem dem weiteren Gewindebereich (37, 38) nahen Bereich des ersten Bauteils (27) und/oder des zweiten Bauteils ein im Bereich der Schnittstelle (29) mündender Rückführbereich (45, 46) vorgesehen ist, der die Schnittstelle (29) mit einem von der Schnittstelle (29) abgewandten Bereich des weiteren Gewindebereichs (37, 38) verbindet.

12. Vorrichtung nach einem der Ansprüche 1 bis 10, **dadurch gekennzeichnet, dass** das zweite Bauteil (28) mit in im Wesentlichen radialer Richtung verlaufenden Schaufelbereichen (47) ausgeführt ist, zwischen welchen die Übertragungsbereiche (34, 60, 61) vorgesehen sind.

13. Vorrichtung nach einem der Ansprüche 1 bis 12, **dadurch gekennzeichnet, dass** Strömungsquerschnitte der Übertragungsbereiche (34, 60, 61) sich in Strömungsrichtung des Hydraulikfluids in den Übertragungsbereichen (34, 60, 61) ausgehend von der Schnittstelle (29) in Richtung der Schmierstellen verringern.

14. Vorrichtung nach einem der Ansprüche 1 bis 13, **dadurch gekennzeichnet, dass** die Übertragungsbereiche (34, 60, 61) unter einem definierten Winkel in radialer Richtung im zweiten Bauteil (28) verlaufend angeordnet sind, um das Hydraulikfluid entgegen der Rotationsrichtung des zweiten Bauteils (28) in radialer Richtung durch die Übertragungsbereiche (34, 60, 61) zu führen.

15. Vorrichtung nach einem der Ansprüche 1 bis 14, **dadurch gekennzeichnet, dass** auf der dem ersten Überleitungsbereich (32) abgewandten Seite des weiteren Gewindebereichs (37, 38) eine weitere vorzugsweise einen Dichtring umfassende Dichteinrichtung (39, 40) vorgesehen ist.
